# EUROPEAN PATENT APPLICATION

(11) **EP 3 617 173 A1**
(43) Date of publication of application: **04.03.2020**
(21) Application number: 18212788.6
(22) Date of filing: 14.12.2018
(51) Int. Cl.: C04B 41/00, C04B 41/50, C04B 41/65

(54) **USE OF A LAYER FOR SURFACE PROTECTION AND/OR PRESERVATION OF A TANGIBLE CULTURAL HERITAGE**

(71) Applicant: Fyzikální ústav AV CR, v.v.i., 18221 Praha 8 (CZ)
(72) Inventor: Demo, Pavel, 16200 Praha 6 (CZ); Pro ek, Zden k, 16200 Praha 6 (CZ)

(57) **Abstract**

The present invention relates to protection of a tangible cultural heritage against damage. The present invention particularly relates to use of nanotechnology for said protection. More particularly, the present invention concerns use of a thin layer for protection and/or preservation of the tangible cultural heritage, especially a lime plaster.

In a first embodiment, use of a layer comprising SiO2 nanofibers for surface protection and/or preservation of a tangible cultural heritage, in particular memorial monument or building is provided.

Other preferred embodiments are provided with thin protected film consisting of SiO2 nanofibers functionalized with nanocrystalline diamond or Ag, Cu or Ti in order to provide better killing effect for bacteria, mould or fungi.

Preferred embodiment of the layer having two sides, where first side is hydrophobic and second side is hydrophilic, is used for protection against water moisture and as a one-way valve.

## Description

### Technical field

The present invention relates to protection of a tangible cultural heritage against damage. The present invention particularly relates to use of nanotechnology for said protection. More particularly, the present invention concerns use of a thin layer for surface protection and/or preservation of the tangible cultural heritage, especially a lime plaster.

### Background art

Cultural heritage is the legacy of physical artefacts and intangible attributes of a group or society that is inherited from past generations.

Cultural heritage can be divided into tangible culture (such as buildings, monuments, landscapes, books, works of art, and artefacts), intangible culture (such as folklore, traditions, language, and knowledge), and natural heritage (including culturally significant landscapes, and biodiversity).

Surface of a tangible cultural heritage are always subject to damage from surrounding environmental.

A plaster is a versatile material that is often applied over brick, stone, half-timber, or frame construction or to a statue. It provided a durable surface that was easy to clean and that could be applied to flat or curved walls and ceilings. However, the plasters of the tangible cultural heritage are damaged during the time, for example due to environmental condition or by frequent physical contacts.

For protection of the plaster, a layer applied on its surface can be used. Protective layers, in general, have to fulfil several necessary conditions in order to be applied in cultural heritage problems. Among others, mechanical stability, thermal stability and photostabilities are required, environmentally friendly coatings are suitable and the smooth coexistence between protective layer and original material are necessary.

At a first look, the surface and in particular the plaster of the tangible cultural heritage may appear with problems that its total removal seems the only alternative. But there are practical and historical reasons for saving it.

State of the art refers, for example, to a water- and oil-repelling adsorbing film formed from compositions which are chemically very aggressive to the plaster (US5324566). The chemical aggressiveness of the composition mentioned above is especially not acceptable for plaster of the tangible historical heritage because of the demand for long term remain. Furthermore, the composition above does not respect any material composition of the material of the heritage form its historical epoch.

The same disadvantages applies to the solution discloses in US5466486 or WO/2016/149081.

Also acrylic polymers exhibit high rigidity and relatively fast degradation due to photooxidative reactions making them unsuitable in conservation applications.

Application of nano-materials are used in a variety of, manufacturing processes, products and healthcare including paints, filters, insulation and lubricant additives, even in the building and/or architecture.

Nanomaterials describe, in principle, materials of which a single unit is sized (in at least one dimension) between 1 to 1000 nanometres.

According to standard convention, nanoparticles have all three dimensions in the nanoscale range. On the other hand, nanofibers are fibres with diameters in the range of nanometers and of lengths substantially greater, for example in scales from tens to hundreds micrometers.

It is an object of the present invention to provide a solution for protection of surface of a tangible cultural heritage and to extend both qualitatively and quantitatively its durability, in particular historical lime plasters, respecting traditional compositions of each material and historical procedures and/or recipes as well.

### Summary of the Invention

The above mentioned problems of said protection and/or preservation of surface of a tangible cultural heritage are, in some aspects, solved by the present invention.

The present invention involves application of nanotechnologies. In particular, a layer comprising a SiO₂ nanofibers can be used for surface protection and/or preservation of a tangible cultural heritage, in particular memorial monument or building.

According to some aspect of the present invention, the material of surface of the tangible cultural heritage can be gritstone or sandstone for monument and, for example, lime plaster for historical building. It has to be pointed out, however, that the application of SiO₂-based nanofibers for protection of pure concrete construction is not too suitable because of its highly basic pH, which is about 13.

The use of the layer as mentioned above exhibits the properties fulfilling the requirements for surface protection, especially surface protection of historical plasters and therefore minimizing undesirable influences onto protected surface itself.

The essential advantage of the use of the SiO₂ nanofibers is in their properties, such as relatively strong hydrophobicity. The hydrophobicity is further helpful in resulting effect which is minimization of the presence of bacteria, fungi, algae, etc. on the surface of protected layer.

Furthermore, silicon, in its modification, is presented in historical lime plasters as a natural constituent of them. Consequently, no bias and/or additional mechanical stress in mechanical and/or chemical properties exists between original and the layer according to the invention.

Indeed, the layer comprising SiO₂ nanofibers are, in preferred embodiments, bonded on the lime plasters via covalent, resp. dipole bonds contrary to other types of a protective layer (such as, for example, fluorine-based coatings) exhibiting lower adhesion to the surface due to relatively weak van-der-Waals interaction forces. Moreover, said layer forms within lime plaster silicon-based network upgrading its mechanical properties. Application of silicon nanoparticles alone, on the other hand, is complicated because of lower homogeneity of particles dispersion, which as a result, does not provide desirable technical effect as made by the layer according to the present invention.

There are different types of plasters which are available. There are, for example, lime plaster, cement plaster, mud plaster or stucco plaster. However, as a preferred embodiment of the present invention, the layer comprising SiO₂ nanofibers, for above-mentioned protection and/or preservation, are especially suitable for a lime plaster.

According to another embodiment, the layer can further comprise nanocrystalline diamond incorporated into the SiO₂ nanofiber.

Nanocrystalline diamond (NCD) provides good killing effect for bacteria presented in the plaster, in particular a lime plaster. Typical size of NCD incorporated into SiO₂ nanofiber is spanned from 5 to 10 nanometres, while the typical bacterial sizes are in scales of micrometres. Nanocrystalline diamond can be incorporated into SiO₂ nanofibers by electrospinning techniques.

The technical effect provided by NCD is enhanced killing effect is mechanical damage of cells' wall.

In another embodiment, the layer comprises a biocidal compound comprising an element or ion selected from the group consisting of: Ag; Cu; and Ti.

The above-mentioned elements are useful for killing bacteria, algae or mould from the whole range of its spectrum.

In an aspect of the Invention, the layer comprising nanocrystalline diamond incorporated into the SiO₂ nanofibers or the layer comprises a biocidal compound comprising an element or ion selected from the group consisting of: Ag; Cu; and Ti is particularly useful for protection against bacteria or algae or mould, even more particular against bacteria, algae or mould selected from the consortium consisting of: Burkholderia cepacia; Sphingomonas paucimobilis; Sphingomonas multivorum; Aphanothece stagnina; Chroococcus bacillaris; Botrychloris cumuli,Aspergillus sp,, Cladosporium sp., Aureobasidium sp., Mucor sp. Alternaria sp..

In another embodiment, a mean diameter of SiO₂ nanofibers is ranging from 50 nm to several hundreds of nanometres.

The nanofibers with the diameter in the range as mentioned above, provides mechanical and chemical stability of the surface, for example a plaster.

In another embodiment, the layer is incorporated to the lime plaster in a depth of 1-2 mm from its surface. This depth provides an optimal functionality of coatings.

In another embodiment, the layer comprises a first surface and a second surface wherein the first surface is hydrophobic and the second surface is hydrophilic.

This embodiment is particularly useful for protection of the plaster against water humidity, resp. moisture. Hydrophobic side prevents water before imbibing into the plaster and the hydrophilic side pumps residual water in the plaster outward. It is assumed that hydrophilic part is, of course, attached to the plaster and hydrophobic part is outward.

The embodiment of the layer wherein the layer comprises a first surface and a second surface wherein the first surface is hydrophobic and the second surface is hydrophilic is particularly useful as a one-way valve.

In the preferred embodiment, the hydrophobic surface is provided by hydrogenation functionalization and the hydrophilic surface is provided by oxygen functionalization.

In another embodiment, the layer according to anyone of the preceding embodiments can be used against water moisture. Protective layer hydrophobicity results in self-cleaning properties of surface and also in decreasing of biological colonisation.

In another embodiment, the layer according to anyone of the preceding embodiments can be used for mechanical hardening of the surface of the memorial monument or building.

It is another object of the present to provide a method for preparation of a layer conservation of a plaster of a tangible cultural heritage; the method comprises steps of:
a) analysis of internal and external conditions of the tangible cultural heritage, under consideration and determination of present pollutants and other agens;
b) sampling of bacteria and/or fungi and/or algae in situaccording to appropriate Protocols;
c) bacteria and/or fungi and/or algae laboratory cultivation and determination of a composition having maximal killing effect, preferably in terms of optical density; and
d) preparation of a layer comprising SiO2 nanofibers and the composition having maximal killing effect.

### Brief description of the Drawings

Fig. 1a shows a typical example of protected and unprotected surface of tangible cultural heritage, in particular a lime plaster.
Fig. 1b is a record photography of example carried according to our Invention. The area of experiment was restricted, not open for public inspection.
Fig. 2 represents a record from scanning electron microscope (SEM) showing typical .diameters of SiO₂ nanofibers suitable for incorporation into a lime plaster.
Fig. 3 shows hydrophobicity of a layer according to the present invention. The hydrophobicity is proved by contact angles conventionally measured through the liquid, where a water drop meets the solid surface of the plaster provided with the layer.
Fig. 4 shows moulds content in the samples in situ of the Hradcany square, Prague.
Fig. 5 shows one of the most typical mould Aspergillus.
Fig. 6 shows typical outputs of sampling.
Fig. 7 shows killing effect on Consortium of bacteria, via optical density,
Fig. 8 shows killing effect on moulds determined by use of optical density measurements.
Fig. 9 shows impact of size of the composition on killing effect. As it can be seen, the moulds (in our case, Penicillium sp. PS) are practically unaffected by bigger-sized S-Nag nanoparticles.
Fig. 10 represents illustrative scheme of the experiment connected with the mechanical consistency of SiO2 nanofibers.
Fig. 11 represents photography of tested plaster provided without and with SiO2 nanofibers after 1. phase of the experiment.
Fig. 12 represents photography of tested plaster provided without and with SiO2 nanofibers after 2. phase of the experiment.

### Detailed description of the preferred embodiments

In a first example of the present invention, use of a layer 21 comprising SiO₂ nanofibers alone for surface **2** protection of a plaster **11** is presented.

The SiO₂ nanofibers were prepared according to a method disclosed in Czech patent CZ 303 911. The nanofibers were further processed into a thin layer **21.** The thickness of the layers was spanned from one to several micrometres. The thin layer was applied to a plaster **11** which were achieved from historical part in Prague in situ, Hradcany square.

The unprotected surface **3** of the plaster **11** of a tangible cultural heritage **1,** which was not provided with the layer **21** according to invention, suffers for mechanical damages **4** and includes bacteria and algae and mould **5.**

It has been revealed that SiO₂ nanofibers, applied in a form of a thin layer **21** on surface **2** of the plaster **11,** provides good protection against water and therefore it kills said bacteria and/or algae and/or mould **5** in the plaster **11.** Furthermore, the layer **21** provides good mechanical stability of surface **2** of the plaster **11** as well.

The essential advantage of the use of the SiO₂ nanofibers applied onto surface **2** of the plaster **11** is in their properties, such as relatively strong hydrophobicity (with wetting contact angle more than 120°) of this system resulting in minimization of the presence of bacteria, fungi and algae **5,** etc. on the protected surface **2** by the layer **21.**

Silicon, even in its modifications, is already presented in historical lime plasters **11** as a natural constituent of the plaster or building itself. Consequently, no bias in mechanical/chemical properties exists between original and artificial protected layers **21** in contrast to applied methods according to the state of the art.

In accordance with the present invention, a set of indoor/outdoor experiments confirmed the adequacy of application of thin layer comprising SiO₂ nanofibers to protect historical lime plasters.

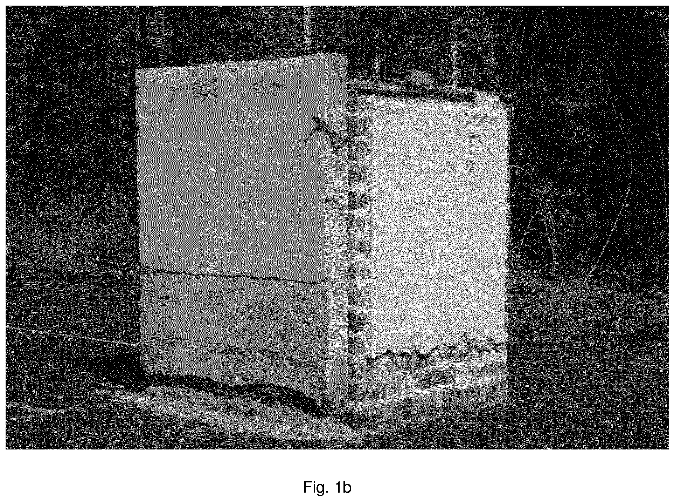

The indoor experiment Protective efficiency of thin film consisting of SiO₂-based nanofibers was analysed in indoor (resp. outdoor) experiments. In both cases, the lime plaster was covered by protective layer. Then the samples have been exposed to influence of water, resp. to other external conditions in outdoor experiments (see Figs.1b,10,11,12).

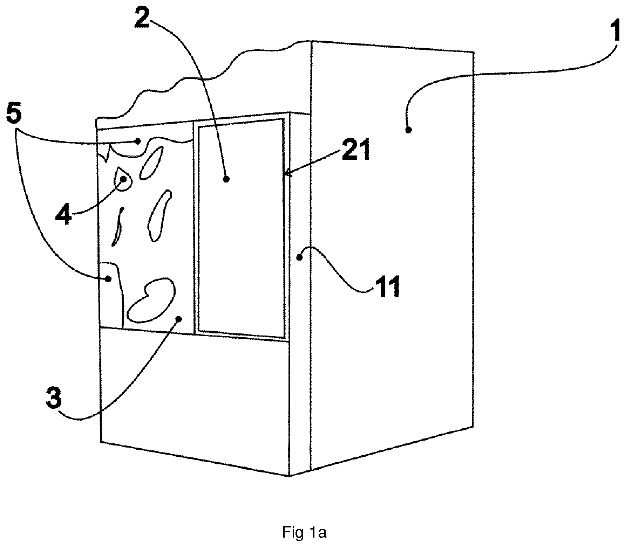

Fig. 1a shows typical result of comparison between protected and unprotected surface **2,** resp. **3** of the plaster 11. As it shown, unprotected surface **3** is provided with mechanical damage **4,** in particular there is shown numerous of holes in the structure of the plaster **11.** On the other side, the protected surface **2** of the plaster **11** according to the invention is flat.

Fig. 1b shows record photography of the protected/unprotected wall from the outdoor experiment described above. The experiment was carried on area with restricted access to public.

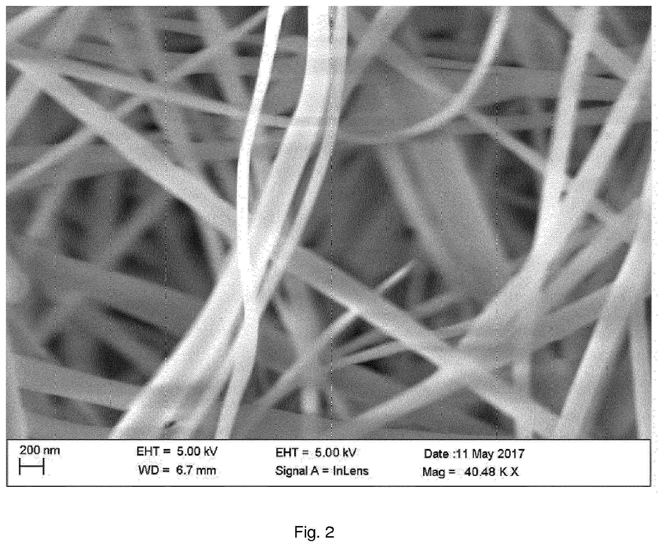

During the experiments, it has been revealed that SiO2 nanofibers having mean diameters spanned in a range of 100-1000 nm is particular useful for protection of the lime plaster **11.** As shown in Fig. 2, nanofibers with the diameter as mentioned above were identified by SEM before the next procedure of formation to a thin layer **21** and application to the surface **2** of the plaster **11.**

The layer **21** comprising SiO2 nanofibers having mean diameters spanned in a range of 100-1000 nm exhibit the properties fulfilling requirements to protect the surfaces **2** of historical lime-based plaster **11** and minimizing undesirable influences onto protected surface **2** itself.

Furthermore, it was found that the layer **21,** according to our invention, incorporated to the lime plaster **11** in a depth of 1-2 mm from its surface is particularly effective.

In order to further limit impacts of bacteria, fungi, algae **5** on plaster **11,** preferred embodiment of the layer **21,** comprising SiO2 nanofibers and nanocrystalline diamond incorporated into the nanofibers, are used.

In order to simulate condition of the environment during long time, following experiment were conducted. The experiment comprises the step of:
a) analysis of internal and external conditions of a historical object 1, which was situated in Hradcanske square of historical part of Prague. Analysis were under consideration and determination of present pollutants and other agens;
b) sampling of bacteria, fungi, algae 5 in situ;
c) bacteria, fungi, algae 5 cultivation and determination of the proper composition having maximal killing effect to the above mentioned bacteria, fungi and algea 5; and
d) preparation of protection layer 21 comprising SiO2 nanofibers and proper bacteriocid composition identified according to the step c.

In respect to step a) of the above-mentioned method, following present pollutants and other agens were determined:

As a pollutants, SOₓ and NOₓ are frequently present in exteriors of historical monuments.

Most typical bacteria frequently occurring:
- *Burkholderia cepacia*
- *Sphingomonas paucimobilis*
- *Sphingomonas multivorum*

Typical algae occurrence:
- *Aphanothece stagnina*
- *Chroococcus bacillaris*
- *Botrychloris cumuli*

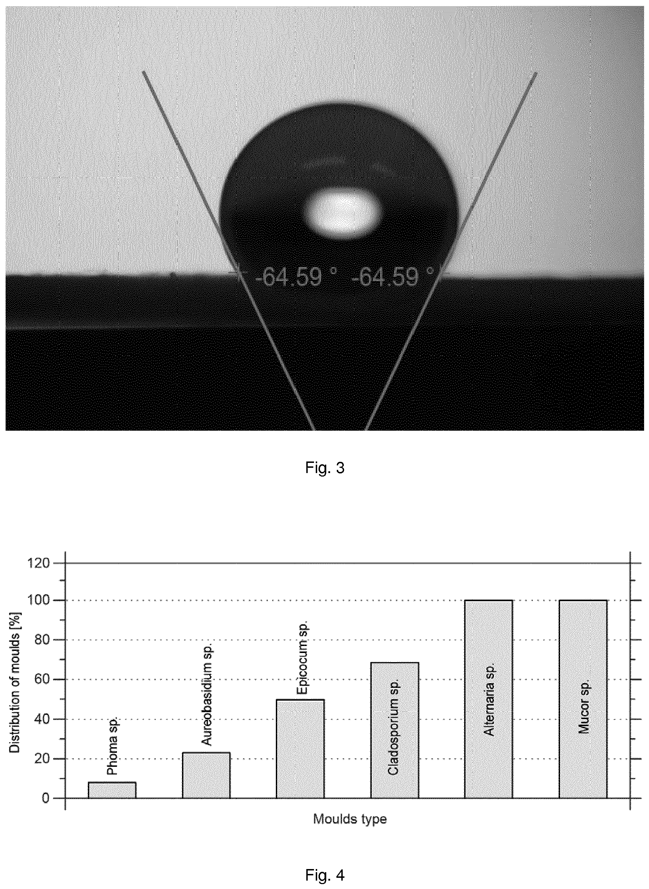

Moulds content in samples are presented in Fig. 4.

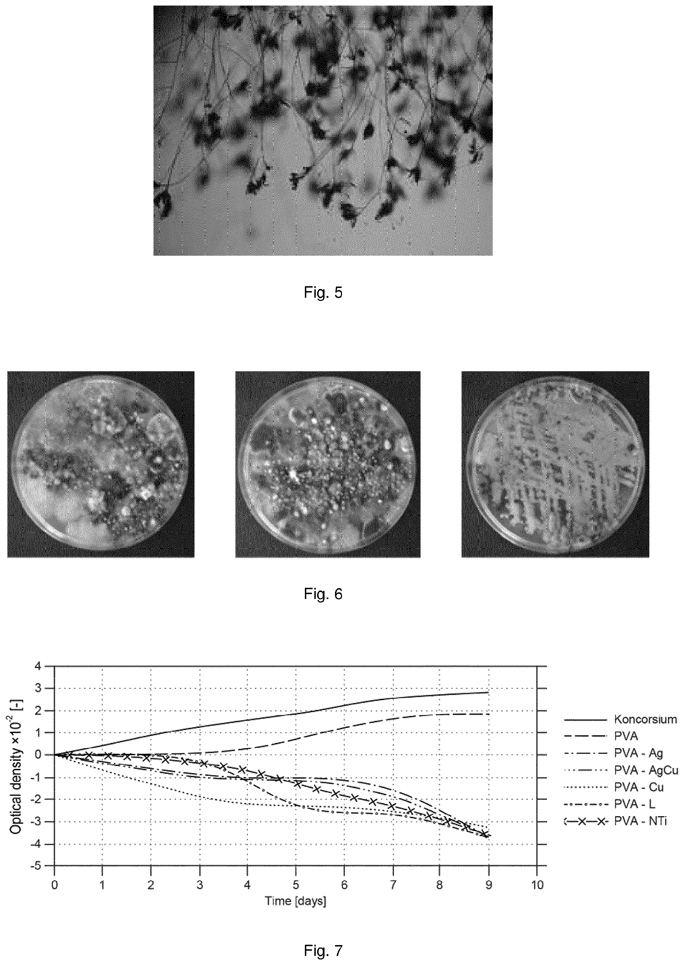

In particular, one of the most typical mould *Aspergillus niger* were identified, as shown in Fig. 5.

In accordance with the step b), sampling of the above mentioned bacteria, fungi, algae **5,** which were presented at the place of the historical building **1,** were collected from the above mentioned historical part of Prague.

According to step c), the bacteria, fungi, algae **5** as already identified were cultivated. Cultivation of microorganisms was provided under condition as follows:
i. Consortium of microorganisms was cultivated after sampling in KNOP-medium for 14 days (under temperature 20 °C, lighting 2,5 kLux via cycles 8/16 light/dark and under agitation 300 rpm).
ii. Kinds of the microorganisms within consortium were subsequently identified applying their microscopical characteristics (moulds) or biochemical properties using commercial kits (Pliva-Lachema CR, Enterotest, Erba Lachema CR in the case of bacteriae).

In order to determine optimal composition with maximal biocidal effectivity, following step were carried out:
iii. Input consortia of microorganisms were inoculated into 100 ml of KNOP-medium (1:100) and pre-incubated for 7 days following standard conditions for the cultivation. In this way, the sample is prepared to be exposed to influence of different types of biocidal substances.
iv. Killing effect of the following active biocidal compounds was studied (see Tab1):

**Tab. 1**

| | Composition | Biocidal | Concentration [%] |
|---|---|---|---|
| | | compound | |
| PVA-Ag | AgNO3 | Ag ions | 0-1.5 |
| PVA-Cu | CuSO4.2H2O | Cu ions | 0-2.0 |
| PVA-AgCu | AgNO3+CuSO4.2H2O | Ag+Cu ions | 0-1.5 |
| PVA-NTi | TiO2 | Ti | 0-2.0 |
| PVA-L | Lignofix | commercial | <2.0 |

v. In order to analyse biocidal properties, the 1 ml solutions of the above substances have been added into the grown micro-organisms consortiums according to step iii.

After seven days of the standard cultivation, the optical density was measured. This method utilizes the propagation of electromagnetic wave (of a given wavelength) through a consortium of microorganisms and allows determining the number of microorganisms in the sample (while their individual sizes can be computed via absorbance measurements).

In the Figure 7, the change in optical density - due to presence of the various kinds of biocidal compounds - during 9 days is presented. As it can be readily seen, Ag and Cu ions (resp. their combination) exhibit not only a relatively rapid start of killing effect after 3 days acting, but also a long-termed biocidal effect.

Note that consortium of microorganisms is markedly not affected by currently available biocidal compound within 3 first days.

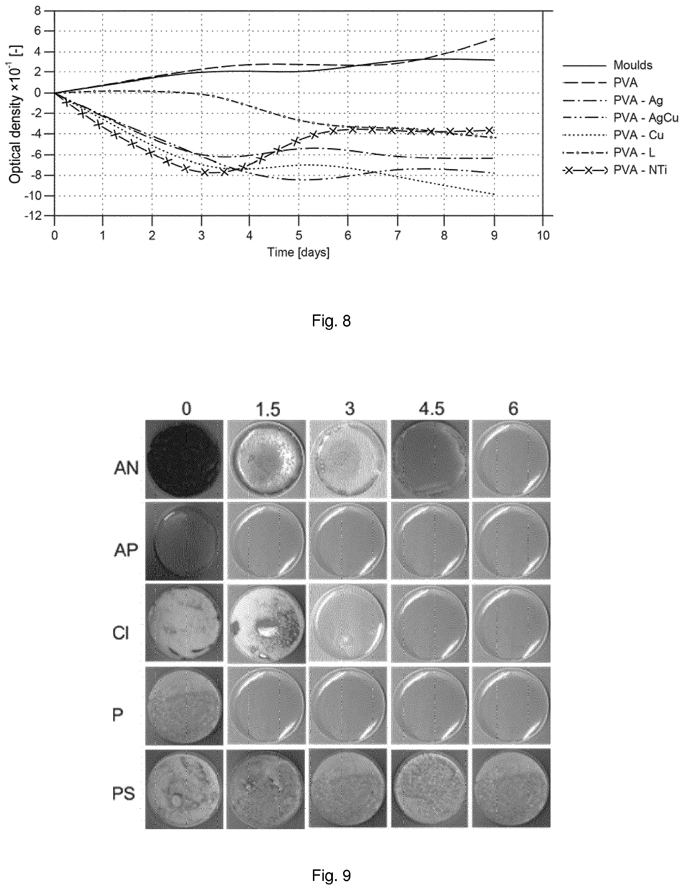

Similar results have been obtained in analysis of influence of biocid on the growth of algae (see Fig. 8). Ag and Cu - ions, resp. their combinations, exhibit more appropriate biocidic activity than other compounds under consideration.

It has to be pointed out, however, that the application of copper-based compounds to prevent the occurrence of microorganisms (bacteriae, algae, moulds) on the surfaces of historical objects (in particular, lime plaster 11s) is practically very limited due to ecological reasons. Consequently, Ag-ions seem to be a more appropriate favourite for applications on tangible cultural heritage.

Size-effect of Ag-nanoparticles on the fungicidal properties has been analyzed for the following mixture of moulds: Aspergillus niger AN (the most aggressive mould), Aureobasidium polulans AP, Cladosporium sp. CL and Penicillium sp. P.

Two kinds of commercial Ag-nanoparticles suspensions have been applied (see Tab. 2):

**Tab. 2**

| | Size [nm] | Concentration [ppm] |
|---|---|---|
| U-NAg | 2 | 847 |
| S-NAg | 100 | 20 |

Ag-nanoparticles were localized into mixture of semisynthetic medium used for the general cultivation of fungi from water samples (Czapek Dox Agar medium) and moulds mixture (of the total volumes ranging from 50 to 200 microliters). System was then cultivated during 14 days.

The smaller particles U-NAg exhibit higher level of the killing effect (see Tab. 2, evaluation according to Standard ISO CSN 846):

**Tab. 3**

| **Mould/concentration** | **1.50** | **2.25** | **3.00** | **3.75** | **4.50** | **5.25** | **6.00** |
|---|---|---|---|---|---|---|---|
| **of Nag (g/m2)** | | | | | | | |
| Aspergillus sp. AN | 4 | 3 | 3 | 1 | 1 | 1 | 1/0 |
| Aureobasidium sp. AP | 1 | 0 | 0 | 0 | 0 | 0 | 0 |
| Cladosporium sp. CL | 2 | 1/0 | 0 | 0 | 0 | 0 | 0 |
| Penicillium sp. P | 0 | 0 | 0 | 0 | 0 | 0 | 0 |

In the table 3, the following metric is applied: 0 -no moulds, 5-maximal coverage with moulds.

The final results are represented in Fig. 9. As it can be seen, the moulds (in our case, Penicillium sp. PS) are practically unaffected by bigger-sized S-Nag nanoparticles.

According to step d), a protection layer **21** comprising SiO₂ nanofibers was modified using low-temperature plasma techniques to provide nanofiber with the composition having the most promising killing effect.

According to another preferred embodiment, the layer 21 can be hydrophobized on a first side of the layer 21 and the second side of the layer 21 can be hydrophilized.

The above mentioned preferred embodiment may serve as a one-way valve with the meaning that the hydrophobized side protects the lime plaster 11 from water since the side is not penetrable for the water. On the other side, the hydrophilized side "pump" water from the humid plaster 11.

Subsequent experiment, in accordance of the preferred embodiment for use of the layer 21 for mechanical hardening, shows the effect of moisture on the consistency of the sample with the SiO2 nanofibers.

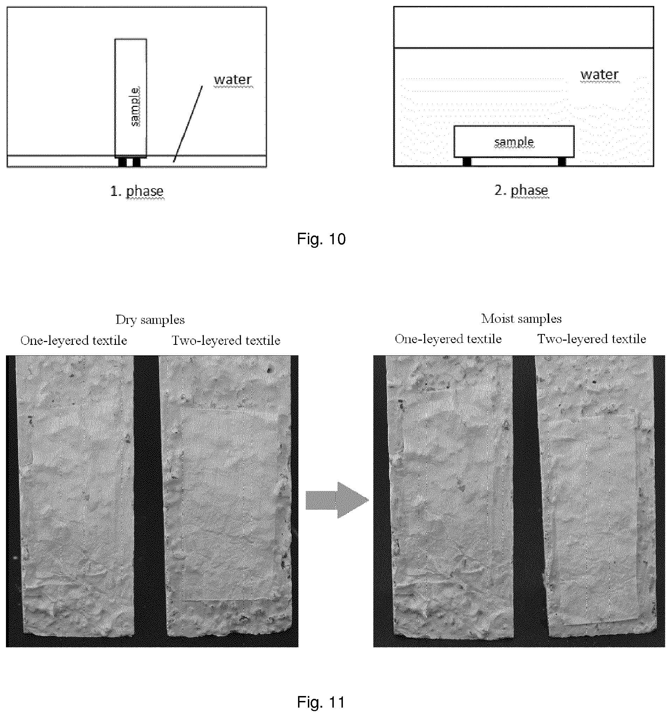

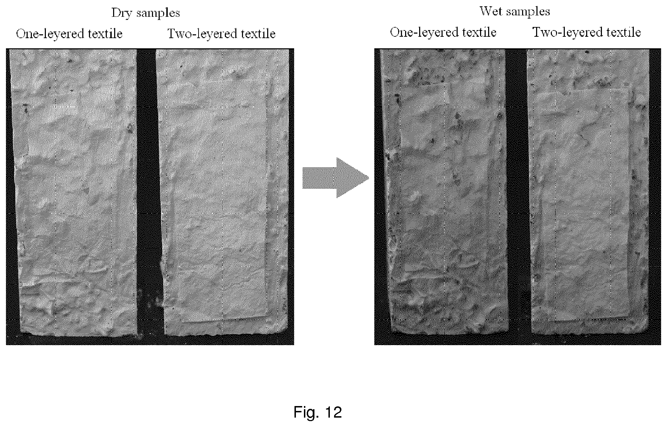

A sample comprising a layer 21 according to the invention was tested in two phases (see Fig. 10). The sample was partially submerged to the water, whereas the water raises due to capillary forces for 24 hours during the first phase of the experiment. Subsequently, in the second phase, the sample was subjected to extreme conditions in the form of immersion of whole sample under water for 72 hours. The moisture affected the lime matrix itself resulting in degradation of mechanical properties of sample.. The matrix, despite the extreme conditions, in the form of a submerged sample, remained intact. The main observed factor was the consistency of SiO₂ nanofibers within the surface of the samples. The consistency was monitored visually and documented using photos. Visually, it was found that both the wet samples (Figure 12) and the fully saturated (Figure 13) did not separate the SiO₂ nanofibers from the surface of the samples. The consistency of the SiO₂ nanofibers with the surface of the samples remained after subsequent drying.

In accordance with the teaching above, the layer can be also applied to gritstone or sandstone monument with the same technical effect as mentioned above for lime plaster **11.**

## Claims

1. Use of a layer (21) comprising SiO₂ nanofibers for surface (2) protection and/or preservation of a tangible cultural heritage (1), in particular memorial monument or building, wherein the surface is not from concrete material.

2. Use according to claim 1, wherein the material of the surface (2) is. gritstone or sandstone

3. Use according to claim 1, wherein the surface (2) is provided with a plaster (11), preferably a lime plaster.

4. Use according to anyone of the preceding claims, wherein the layer (21) further comprises nanocrystalline diamond incorporated onto the SiO2 nanofiber.

5. Use according to anyone of the preceding claims, wherein the layer (21) comprises a biocidal compound comprising an element or ion selected from the group consisting of: Ag; Cu; and Ti.

6. Use according to anyone of the preceding claims, wherein diameter of SiO2 nanofiber is in range from 50 nm to several hundreds of nm..

7. Use according to anyone of the claims 2 - 5, wherein the layer (21) is incorporated to the lime plaster in a depth of 1-2 mm from the free surface (2) of the plaster.

8. Use according to anyone of the preceding claims, wherein the layer (21) comprises a first surface and a second surface wherein the first surface is hydrophobic and the second surface is hydrophilic.

9. Use according to claim 7, wherein the hydrophobic surface is provided by hydrogenation functionalization and the hydrophilic surface is provided by oxygen functionalization.

10. Use of the layer (21) according to anyone of the preceding claims against water moisture.

11. Use of the layer (21) according to claim 3 or 4 for protection against bacteria, algae or mould (5).

12. Use according to claim 11 against bacteria, algae or mould (5) selected from the group consisting of: *Burkholderia cepacia; Sphingomonas paucimobilis; Sphingomonas multivorum; Aphanothece stagnina; Chroococcus bacillaris; Botrychloris cumuli, Aspergillus niger, Mucor sp.,. Aureobasidium sp., Cladosporium sp*.

13. Use of the layer (21) according to anyone of the preceding claims for mechanical hardening of the surface of the tangible cultural heritage (1).

14. Use of the layer (21) according to claim 7 or 8 as a one-way valve.

15. A method for preparation of a layer (21) conserving a tangible cultural heritage (1), wherein the surface is not from concrete material, the method comprises steps of:
a) analysis of internal and external conditions of the tangible cultural heritage (1), under consideration and determination of present pollutants and other agens;
b) sampling of bacteria and/or fungi and/or algae (5) in situ;
c) bacteria and/or fungi and/or algae (5) cultivation and determination of a composition having maximal killing effect, preferably in terms of optical density; and
d) preparation of a layer (21) comprising SiO2 nanofibers and the composition having maximal killing effected.
